# EUROPEAN PATENT SPECIFICATION

(11) **EP 4 330 854 B1**
(45) Date of publication and mention of the grant of the patent: **19.11.2025**
(21) Application number: 22724877.0
(22) Date of filing: 26.04.2022
(51) Int. Cl.: G06K 7/14, G06K 19/06, G06Q 30/0601

(54) **PERSONALIZED INFORMATION READING SYSTEM**
LESESYSTEM FÜR PERSONALISIERTE INFORMATIONEN
SYSTÈME DE LECTURE D?INFORMATIONS PERSONNALISÉES

(30) Priority: 26.04.2021 IT 202100010517
(43) Date of publication of application: 06.03.2024
(73) Proprietor: SLP S.r.l., 20122 Milano (MI) (IT)
(72) Inventor: GATTO, Salvatore, 20122 Milano (MI) (IT)
(74) Representative: Giuliano, Natalia
(86) International application number: PCT/IB2022/053846
(87) International publication number: WO 2022/229832

(56) References cited:
- JP-B2- 4 113 328
- US-A1- 2014 339 312

## Description

The present invention relates to a personalized information reading system.

In particular, the present invention relates to a personalized information reading system, for the traceability of the products and of product counterfeiting.

Counterfeiting is a phenomenon that affects most of the product sectors. The common denominator of the sectors most affected is that counterfeiting constitutes a real threat to the health of consumers, to the protection of workers, to intellectual property intended as an element that generates value for companies and which justifies the difference in the price of the product. The sectors most involved are in fact: auto parts, clothing and accessories, pharmaceuticals, food, games and toys and luxury goods. Several solutions are known in this area.

Currently known information reading systems have the limit of being limited to a specific sector, and often to a specific product, with considerable difficulty for the consumer in tracking it. Furthermore, the existing systems are not dynamic, activating on several levels, but static and limited to the production and purchase phases.

A solution is described in the patent application US2014339312A1, reporting a method and apparatus for encoding, in a simultaneous multiple security application, independently encrypted security data elements within a single matrix of blocks in a progressive barcode. The method and apparatus includes encoding information of a first data element within the matrix using black modules and, encoding information of a second data element within the matrix using color modules. The barcode being configured to be overprinted as it progresses through progressive states. The progressive barcode, resulting from the overprinting through the progressive states, masking the ability to conclusively determine the barcode in a previous state. The independent claim is delimited against this document.

Nevertheless, this known solution is not able to follow the life stages of a product A, from production to disposal, also correlating products B, C, ... N which in various ways interact with the main product A, creating a sort of global register of products in which it is possible guarantee tracing and non-counterfeiting of the single product or its components or spare parts.

The purpose of the present invention is to provide a personalized information reading system, which is able to counter the phenomenon of counterfeiting through the establishment of an immediate, effective and efficient verification system, based on the implementation of an IT platform capable of contain and manage the single registry and the traceability of individual products accessible through an application software dedicated to mobile devices, such as smartphones or tablets, and computers, therefore having characteristics such as to overcome the limits of current known systems and methods.

More in particular, the aim of the invention is to follow the life stages of a product A, from production to disposal, also correlating products B, C, ... N which in various ways interact with the main product A, creating a sort of global register of products in which it is possible guarantee tracing and non-counterfeiting of the single product or its components or spare parts.

According to the present invention, a personalized information reading system is provided, as defined in claim 1.

For a better understanding of the present invention, a preferred embodiment is now described, purely by way of nonlimiting example, with reference to the attached drawings, in which:

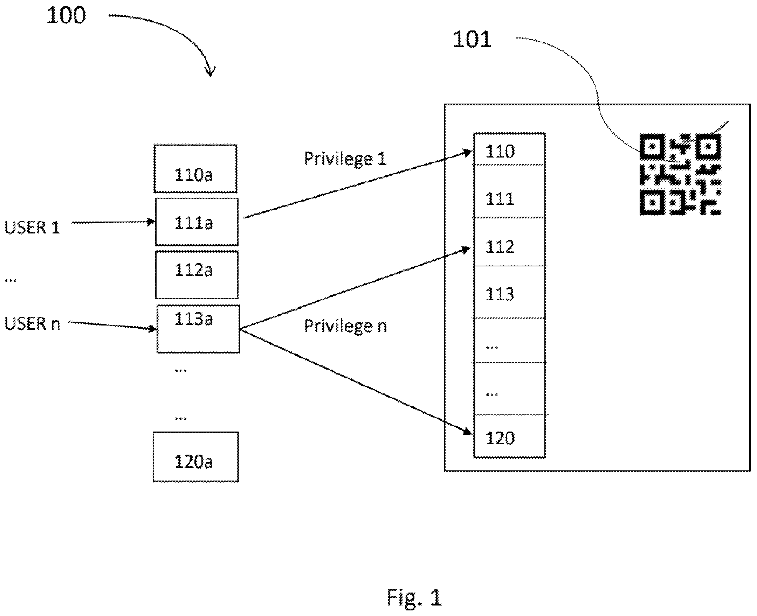

- Figure 1 shows a diagram of a personalized information reading system, according to the invention.

The personalized information reading system 100 comprises:
- at least one QR Code (101) applied to each product;
- a plurality of blocks of information (110, 111, 112, 113... 120) containing data related to at least one product, said data being written on said QR Code (101);
- a plurality of devices (110a, 111a, 112a, 113a, ... 120a) on which a dedicated software program is installed, said dedicated software program being configured to read and/or write data from and/or to the at least one QR Code (101);
- An encrypting module configured to encrypt the information associated with the at least one QR code (101) uniquely associated with a product;
- a software block, configured for the management of at least one QR Code (101) applied to at least one product and of the encrypting module, said software block comprising a access management module defining user access privileges associated to a corresponding user comprised in a plurality of users, said user access privileges enabling to read and/or read and write data of at least one block of information comprised in the plurality of block of information (110, 111, 112, 113... 120);
- a database comprising the plurality of blocks of information (110, 111, 112, 113 ... 120) and a list of the plurality of users registered or enabled to access, to one block of information or part of it or to more blocks, said software block being in communication with said database, and with said dedicated software program.

The personalized information reading system 100 for the traceability of the products and of the products counterfeiting according to the invention, consists of an application, or dedicated software program, which can be installed on a plurality of devices, and is based on the reading of a QR code 101 applied to each product during the industrial production process. Said QR code 101 is a unique code generated and printed on the basis of an algorithm that automatically generates a random alphanumeric combination of N characters.

The application, also called dedicated software program, has a plurality of sections to which each user, registered or enabled to access, can access according to specific privileges, for reading and / or reading / writing information contained in one or more specific sections, or block of information. According to an aspect of the invention a user having privileges for writing information in one or more block of information, could also update the database with information related to the status and evolution of product's data, overcoming the limitations of currently known systems. In fact, the plurality of blocks of information (110, 111, 112, 113 ... 120) saved in the database could be updated by selected users having specific writing privileges.

Each section contains information relating to one or more products related to each other (related products can be raw materials, intermediate product, final product at a specific point in their useful life, for example, sale, repair, disposal, etc.).

According to an aspect of the invention, the data comprised in the plurality of block of information, are related to at least one product, and/or to a product and its related products (raw material, intermediate product, final product, components) , said data comprising production, authenticity data, technical characteristics, composition, expiration, origin and useful life stage.

The database, containing a plurality of block of information related to a plurality of product, contain data related to a single product starting from its production date and written by the manufacturer, that is the first user of the system 100, on the unique QR Code associated to the single product. Said data could be updated on the database at different stages of the product life, maintaining the uniqueness of the QR Code, by registered users according to their privileges of writing. Users that have only reading privileges could in fact monitoring data comprised in one or more or part of blocks of information. In fact, some users are enabled to read data entered on the QR Code 101 by the manufacturer, other users, depending on the privileges granted by the system 100, are enabled to read updated data or read and write updated data, being static users or interactive users.

For example, a workshop is authorized to access the system 100 with a defined user profile, and will be able to read the information related to a car that is being repaired, and the information related to components and assembly, being able to overwrite or add information only in some sections, or information block, for example to the piece that is being repaired / replaced, by entering information relating to the origin and originality of the spare part.

According to an aspect of the invention, the plurality of blocks of information (110, 111, 112, 113, ... 120) comprises:
- A first block of information 110, or " physical " level, this information consisting in categorizing a product as not yet purchased by means of the reading the information regarding the manufacturer and the product comprised in the QR Code 101 read by first remote devices 110a, such as terminals or scanners, or by the dedicated software installed on a mobile device;
- A second block of information 111, or "activation" level, consisting in reading the 2D codes comprised in the QR Code 101 read by scanning with dedicated second devices 111a, or second activation devices, such as scanner devices;
- A third block of information 112, or "advanced" level, comprising the additional information and functions contained in QR Code 101 read through third devices 112a on which a user APP is installed;
- A fourth block of information 113, or "transition" level, comprising the tracking information of the waste product by means of the QR Code 101 read by fourth devices 113a, such as terminals or scanners, or by the dedicated software installed on a mobile device.

According to an aspect of the invention, the reading system 100 comprises: a software block configured for the management of at least one QR Code 101 applied to at least one product and the encryption, and a database. The software block and the database communicate with the first devices 110a, the second devices 111a, the third devices 112a and the fourth devices 113a.

According to an aspect of the invention, the personalized information reading system 100 comprises an encryption system for encrypting the information associated with the QR code 101 in turn uniquely associated with a product.

The information sent (in this case the QR Code 101) is encrypted using an algorithm and can be decrypted at the destination only with the appropriate key (by reading the QR Code with the Core Product Management (CPM). The QR codes 101 will therefore be managed by the Core Product Management of the software, which will allow by reading the decoding of the generated encrypted codes, and within which the "APR" (Authentic Products Registry) will be present, which will order and archive the information for the purpose of managing the product data. The key can be stored in the receiving system (in the CPM) or transmitted together with the encrypted data (in the QR Code itself).

The keys (a unique key for the manufacturer, one for the product and one for the services, etc ....) are unique for each category of users. These keys, mixed together, will form the encryption of QR Code 101. The encryption will be 64bit.

According to an aspect of the invention, the software block, configured for the management of a plurality of QR Codes applied a plurality of products, said software block comprising a access management module defining user access privileges enabling a user to read and/or read and write data of at least one block of information comprised in the plurality of block of information (110, 111, 112, 113... 120) related to one or more QR Codes.

According to an aspect of the invention the database comprises a plurality of blocks of information for each QR Code 101 of a plurality of QR Codes.

Advantageously, the system 100 comprises a unique or central software block and a unique or central database, or register to have data related to a plurality of products.

According to an aspect of the invention, the software block is configured to match in real time data comprised in the plurality of blocks of information 110, 111, 112, 113... 120 related to at least one QR Code 101 and data comprised in the database, and to verify in real time a product counterfeiting by mean of said match.

According to another aspect of the invention, the software block is configured to match in real time data comprised in the plurality of blocks of information 110, 111, 112, 113... 120 related to at least one QR Code 101 and data comprised in the database, and to verify in real time a product counterfeiting by mean of said match and/or accesses to the personalized information reading system (100) and to the at least one QR Code (101).

Also, according to an aspect of the invention, the software block is configured to send a warning message if the verify detects counterfeiting, said warning message to be sent to at least one device 110a, 111a, 112a, 113a, ... 120a that has read or written an information block of said QR Code 101, and to save that warning message in the database. For example, the verify made by mean of the software block could detect anomalies related to a product, because of a contradiction between the matched data.

For example, if a first user enabled to read at least a QR Code (101) and at least an information block comprised in said QR Code (101), access to the system 100, scan the QR Code 101 and read said information block, in a specific place and time, if a second user access to the system 100 to scan and read any information block related to the same QR Code 101 in another place an within a specified and limited range of time, the software block, matching in real time the data, verify that the product associated to said QR Code has been counterfeit, and said software block is configured to send a warning message to at least one user, and in particular to the manufacturer, and save that warning message in the database.

Advantageously, the personalized information reading system 100 allows a product to be traced from its production to the end of its useful life, allowing differentiated access to the information associated with it, corresponding to each user access privileges.

Furthermore, advantageously, the reading system 100 allows to activate, on the basis of the life stage of the product, multiple reading levels of the QR Code 101 also by means of devices differentiated by reading levels and by user access privileges.

Furthermore, through this personalized information reading system 100 each product, which is produced and stored with its personal data, is unique, and it is possible to have access to information (such as authenticity, characteristics, composition, expiration, origin) immediately, preventing and significantly reducing falsifications and creating reliability and safety for the consumer and an image of loyalty to the manufacturer.

Advantageously, the interactivity of the system according to the invention, allows enabled authorities in charge and a manufacturer to identify by means of a simple verification via device or application, in real time with the reading of the QR Code, any batches of counterfeit products and to stop their commercialization.

Finally, it is clear that modifications and variations can be made to the personalized information reading system according to the invention described and illustrated here without thereby departing from the protective scope of the present invention, as defined in the attached claims.

## Claims

1. Personalized information reading system (100) for traceability of at least one product and for avoiding counterfeiting of the product, comprising at least one QR Code (101) applied to each product, in which said personalized information reading system (100) comprises:
- a plurality of blocks of information (110, 111, 112, 113... 120) containing data related to at least one product, said data being written on said at least one QR Code (101);
- a plurality of devices (110a, 111a, 112a, 113a, ... 120a) on which a dedicated software program is installed, said dedicated software program being configured to read and/or write data from and/or to the at least one QR Code (101), said at least one QR code being able to be amended by writing data onto the at least one QR code;
- encrypting module configured to encrypt the information associated with the at least one QR code (101) uniquely associated with a product;
- a software block, configured for the management of the at least one QR Code (101) applied to at least one product and of the encrypting module, said software block comprising an access management module defining user access privileges associated to a corresponding user comprised in a plurality of users, said user access privileges enabling to read and/or read and write data of at least one block of information comprised in the plurality of block of information (110, 111, 112, ... 113);
**characterised by**:
- a database comprising the plurality of blocks of information (110, 111, 112, 113..., 120) and a list of the plurality of users registered or enabled to access to one block of information or part of it or to more blocks of information, said software block being in communication with said database, and with said dedicated software program;
said plurality of blocks of information (110, 111, 112, 113... 120) comprising:
- a first block of information (110) which is in active configuration when the product has not yet been purchased, said first block of information being configured to categorize a product as not yet purchased by means of the reading the information regarding the manufacturer and the product comprised in the QR Code (101) read by first devices (110a) comprised in the plurality of devices (110a, 111a, 112a, 113a, ... 120a) , or by the dedicated software installed on a mobile device;
- a second block of information (111) which is in active configuration after the activation of the at least one QR Code (101) by scanning with dedicated second devices (111a) comprised in the plurality of devices (110a, 111a, 112a, 113a, ... 120a);
- a third block of information (112) which is in active configuration after the activation by the second block (111), said third block of information (112) comprising the additional information and functions contained in the at least one QR Code (101) read through third devices (112a) comprised in the plurality of devices (110a, 111a, 112a, 113a, ... 120a);
- a fourth block of information (113) comprising the tracking information of the product at the end of its useful life, by means of the at least one QR Code (101) read by fourth devices (113a) comprised in the plurality of devices (110a, 111a, 112a, 113a, ... 120a) , such as terminals or scanners, or by the dedicated software installed on a mobile device.

2. Personalized information reading system (100) according to claim 1, **characterized in that** information sent by the software block to the at least one QR Code (101) is encrypted by an algorithm and can be decoded at the destination only by means of a key, said key being stored in at least a device comprised in the plurality of devices (110a, 111a, 112a, 113a, ... 120a) or transmitted to the at least one QR Code (101) by the software block.

3. Personalized information reading system (100) according to claim 2, **characterized in that** said key is unique for each category of users.

4. Personalized information reading system (100) according to claim 1, **characterized in that** a plurality of QR Codes (101), associated to at least one product, are activated and made readable in a differentiated manner at each specified stage of the product life, each QR Code being configured to at least one information block comprised in the plurality of information blocks (110, 111, 112, 113... 120) through at least one device comprised in the plurality of devices (110a, 111a, 112a, 113a, ... 120a) differentiated by levels of reading associated to user privileges.

5. Personalized information reading system (100) according to claim 1, **characterized in** comprising a unique registry database, the information relating to each product being stored with the unique registry database.

6. Personalized information reading system (100) according to claim 1, **characterized in that** said dedicated software program, has a plurality of sections to which each user, registered or enabled to access, can access according to specific privileges, for reading and / or reading / writing information contained in one or more blocks of information, also updating said database.

7. Personalized information reading system (100) according to claim 1, **characterized in that** the data comprised in the plurality of block of information (110, 111, 112, 113... 120), are data related to at least one product, and/or to a product and its related products, said data comprising production, authenticity data, technical characteristics, composition, expiration, origin and useful life stage.

8. Personalized information reading system (100) according to claim 1, **characterized in that** said software block is configured to match in real time data comprised in the plurality of blocks of information (110, 111, 112, 113... 120) related to at least one QR Code (101) and data comprised in the database, and to verify in real time a product's anomalies by mean of said match.

9. Personalized information reading system (100) according to claim 1, **characterized in that** said software block is configured to match in real time data comprised in the plurality of blocks of information (110, 111, 112, 113... 120) related to at least one QR Code (101) and data comprised in the database, and to verify in real time a product's anomalies by mean of said match and/or accesses to the personalized information reading system (100) and to the at least one QR Code (101).

10. Personalized information reading system (100) according to claim 8 or 9, **characterized in that** said software block is configured to send a warning message to at least one user, and to save that warning message in the database, if the verify detects anomalies.

## Patentansprüche

1. Personalisiertes Informationslesesystem (100) zur Rückverfolgbarkeit von mindestens einem Produkt und zur Vermeidung von Produktfälschungen, umfassend mindestens einen QR-Code (101), der auf jedem Produkt angebracht ist, wobei das personalisierte Informationslesesystem (100) folgendes umfasst:
- eine Vielzahl von Informationsblöcken (110, 111, 112, 113... 120) , die Daten enthalten, die sich auf mindestens ein Produkt beziehen, wobei die Daten auf den mindestens einen QR-Code (101) geschrieben werden;
- eine Vielzahl von Vorrichtungen (110a, 111a, 112a, 113a, ... 120a) , auf denen ein spezielles Softwareprogramm installiert ist, wobei das spezielle Softwareprogramm so konfiguriert ist, dass es Daten von dem mindestens einen QR-Code (101) liest und/oder auf diesen schreibt, wobei der mindestens eine QR-Code durch Schreiben von Daten auf den mindestens einen QR-Code geändert werden kann;
- Verschlüsselungsmodul, das so konfiguriert ist, dass es die Informationen verschlüsselt, die mit dem mindestens einen QR-Code (101) verbunden sind, der eindeutig einem Produkt zugeordnet ist;
- einen Softwareblock, der für die Verwaltung des mindestens einen QR-Codes (101), der auf mindestens einem Produkt angebracht ist, und des Verschlüsselungsmoduls konfiguriert ist, wobei der Softwareblock ein Zugangsverwaltungsmodul umfasst, das Benutzerzugangsrechte definiert, die einem entsprechenden Benutzer aus einer Vielzahl von Benutzern zugeordnet sind, wobei die Benutzerzugangsrechte das Lesen und/oder das Lesen und Schreiben von Daten mindestens eines Informationsblocks aus der Vielzahl von Informationsblöcken (110, 111, 112, ... 113) ermöglichen;
**gekennzeichnet durch**:
- eine Datenbank, die die Vielzahl von Informationsblöcken (110, 111, 112, 113 ..., 120) und eine Liste der Vielzahl von Benutzern umfasst, die für den Zugriff auf einen Informationsblock oder einen Teil davon oder auf mehrere Informationsblöcke registriert oder freigegeben sind, wobei der Softwareblock mit der Datenbank und mit dem speziellen Softwareprogramm in Verbindung steht;
die Vielzahl der Informationsblöcke (110, 111, 112, 113 ... 120) umfasst:
- einen ersten Informationsblock (110), der sich in aktiver Konfiguration befindet, wenn das Produkt noch nicht gekauft wurde, wobei der erste Informationsblock so konfiguriert ist, dass er ein Produkt als noch nicht gekauft kategorisiert, und zwar durch das Lesen der Informationen bezüglich des Herstellers und des Produkts, die in dem QR-Code (101) enthalten sind, der von ersten Vorrichtungen (110a) gelesen wird, die in der Vielzahl von Vorrichtungen (110a, 111a, 112a, 113a, ... 120a) enthalten sind, oder durch die spezielle Software, die auf einem mobilen Gerät installiert ist;
- einen zweiten Informationsblock (111) , , der nach der Aktivierung des mindestens einen QR-Codes (101) durch Scannen mit dedizierten zweiten Vorrichtungen (111a), die in der Vielzahl von Vorrichtungen (110a, 111a, 112a, 113a, ... 120a) umfasst sind, in aktiver Konfiguration ist;
- einen dritten Informationsblock (112) , der nach der Aktivierung durch den zweiten Block (111) in aktiver Konfiguration ist, wobei der dritte Informationsblock (112) die zusätzlichen Informationen und Funktionen umfasst, die in dem mindestens einen QR-Code (101) enthalten sind, der durch dritte Vorrichtungen (112a) gelesen wird, die in der Vielzahl von Vorrichtungen (110a, 111a, 112a, 113a, ... 120a) enthalten sind;
- einen vierten Informationsblock (113), der die Rückverfolgungsinformationen des Produkts am Ende seiner Nutzungsdauer umfasst, mittels des mindestens einen QR-Codes (101), der von vierten Vorrichtungen (113a) gelesen wird, die in der Vielzahl von Vorrichtungen (110a, 111a, 112a, 113a, ... 120a) enthalten sind, wie z.B. Terminals oder Scanner, oder von der speziellen Software, die auf einem mobilen Gerät installiert ist.

2. Personalisiertes Informationslesesystem (100) nach Anspruch 1, **dadurch gekennzeichnet, dass** die von dem Softwareblock an den mindestens einen QR-Code (101) gesendete Information durch einen Algorithmus verschlüsselt ist und am Zielort nur mittels eines Schlüssels entschlüsselt werden kann, wobei der Schlüssel in mindestens einer Vorrichtung gespeichert ist, die in der Vielzahl von Vorrichtungen (110a, 111a, 112a, 113a, ... 120a) enthalten ist, oder durch den Softwareblock an den mindestens einen QR-Code (101) übertragen wird.

3. Personalisiertes Informationslesesystem (100) nach Anspruch 2, **dadurch gekennzeichnet, dass** der Schlüssel für jede Benutzerkategorie eindeutig ist.

4. Personalisiertes Informationslesesystem (100) nach Anspruch 1, **dadurch gekennzeichnet, dass** eine Vielzahl von QR-Codes (101), die mindestens einem Produkt zugeordnet sind, aktiviert und in jeder spezifizierten Phase der Produktlebensdauer in differenzierter Weise lesbar gemacht werden, wobei jeder QR-Code für mindestens einen Informationsblock konfiguriert ist, der in der Vielzahl von Informationsblöcken (110, 111, 112, 113... 120) durch mindestens eine Vorrichtung aus der Vielzahl von Vorrichtungen (110a, 111a, 112a, 113a, ... 120a), und die Vorrichtungen nach Leseebenen in Verbindung mit Benutzerprivilegien differenziert betrieben werden.

5. Personalisiertes Informationslesesystem (100) nach Anspruch 1, **dadurch gekennzeichnet, dass** es eine eindeutige Registrierungsdatenbank umfasst, wobei die Informationen zu jedem Produkt in der eindeutigen Registrierungsdatenbank gespeichert sind.

6. Personalisiertes Informationslesesystem (100) nach Anspruch 1, **dadurch gekennzeichnet, dass** das Softwareprogramm eine Vielzahl von Abschnitten aufweist, auf die jeder registrierte oder zugriffsberechtigte Benutzer entsprechend spezifischer Privilegien zugreifen kann, um in einem oder mehreren Informationsblöcken enthaltene Informationen zu lesen und/oder zu lesen/schreiben und auch die Datenbank zu aktualisieren.

7. Personalisiertes Informationslesesystem (100) nach Anspruch 1, **dadurch gekennzeichnet, dass** die Daten, die in der Vielzahl von Informationsblöcken (110, 111, 112, 113... 120) umfasst sind, Daten betreffen, die sich auf mindestens ein Produkt und/oder auf ein Produkt und dessen verwandte Produkte beziehen, wobei die Daten die Herstellung, die Echtheitsdaten, die technischen Eigenschaften, die Zusammensetzung, das Verfallsdatum, den Ursprung und die Nutzungsdauer umfassen.

8. Personalisiertes Informationslesesystem (100) nach Anspruch 1, **dadurch gekennzeichnet, dass** der Softwareblock so konfiguriert ist, dass er in Echtzeit Daten, die in der Vielzahl von Informationsblöcken (110, 111, 112, 113 ... 120) enthalten sind, die sich auf mindestens einen QR-Code (101) beziehen, und Daten, die in der Datenbank enthalten sind, abgleicht und in Echtzeit Abweichungen eines Produkts anhand dieses Abgleichs überprüft.

9. Personalisiertes Informationslesesystem (100) nach Anspruch 1, **dadurch gekennzeichnet, dass** der Softwareblock so konfiguriert ist, dass er in Echtzeit Daten, die in der Vielzahl von Informationsblöcken (110, 111, 112, 113 ... 120) enthalten sind und sich auf mindestens einen QR-Code (101) beziehen, und Daten, die in der Datenbank enthalten sind, abgleicht und in Echtzeit Abweichungen eines Produkts anhand dieses Abgleichs überprüft und/oder Zugriffe auf das personalisierte Informationslesesystem (100) und auf den mindestens einen QR-Code (101) überprüft.

10. Personalisiertes Informationslesesystem (100) nach Anspruch 8 oder 9, **dadurch gekennzeichnet, dass** der Softwareblock so konfiguriert ist, dass er eine Warnmeldung an mindestens einen Benutzer sendet und diese Warnmeldung in der Datenbank speichert, wenn die Überprüfung Abweichungen feststellt.

## Revendications

1. Système de lecture d'informations personnalisées (100) pour la traçabilité d'au moins un produit et pour éviter la contrefaçon du produit, comprenant au moins un code QR (101) appliqué à chaque produit, dans lequel ledit système de lecture d'informations personnalisées (100) comprend :
- une pluralité de blocs d'informations (110, 111, 112, 113... 120) contenant des données relatives à au moins un produit, lesdites données étant écrites sur ledit au moins un code QR (101) ;
- une pluralité de dispositifs (110a, 111a, 112a, 113a, ... 120a) sur lesquels est installé un programme logiciel dédié, ledit programme logiciel dédié étant configuré pour lire et/ou écrire des données depuis et/ou vers l'au moins un code QR (101), ledit au moins un code QR pouvant être modifié par écriture de données sur l'au moins un code QR ;
- un module de cryptage configuré pour crypter les informations associées à l'au moins à un code QR (101) associé de manière unique à un produit ;
- un bloc logiciel, configuré pour la gestion de l'au moins un code QR (101) appliqué à au moins un produit et du module de cryptage, ledit bloc logiciel comprenant un module de gestion d'accès définissant des privilèges d'accès utilisateur associés à un utilisateur correspondant compris dans une pluralité d'utilisateurs, lesdits privilèges d'accès utilisateur permettant de lire et/ou de lire et d'écrire des données d'au moins un bloc d'informations compris dans la pluralité de blocs d'informations (110, 111, 112, ... 113) ;
**caractérisé par** :
- une base de données comprenant la pluralité de blocs d'informations (110, 111, 112, 113..., 120) et une liste de la pluralité d'utilisateurs enregistrés ou autorisés à accéder à un bloc d'informations ou à une partie de celui-ci ou à plusieurs blocs d'informations, ledit bloc logiciel étant en communication avec ladite base de données, et avec ledit programme logiciel dédié ;
ladite pluralité de blocs d'informations (110, 111, 112, 113... 120) comprenant :
- un premier bloc d'informations (110) qui est en configuration active lorsque le produit n'a pas encore été acheté, ledit premier bloc d'informations étant configuré pour catégoriser un produit comme non encore acheté au moyen de la lecture des informations concernant le fabricant et le produit comprises dans le code QR (101) lu par des premiers dispositifs (110a) compris dans la pluralité de dispositifs (110a, 111a, 112a, 113a, ... 120a), ou par le logiciel dédié installé sur un dispositif mobile ;
- un deuxième bloc d'informations (111) qui est en configuration active après l'activation de l'au moins un code QR (101) par balayage avec des deuxièmes dispositifs dédiés (111a) compris dans la pluralité de dispositifs (110a, 111a, 112a, 113a, ... 120a) ;
- un troisième bloc d'informations (112) qui est en configuration active après l'activation par le deuxième bloc (111), ledit troisième bloc d'informations (112) comprenant les informations et fonctions supplémentaires contenues dans l'au moins un code QR (101) lu à travers des troisièmes dispositifs (112a) compris dans la pluralité de dispositifs (110a, 111a, 112a, 113a, ... 120a) ;
- un quatrième bloc d'informations (113) comprenant les informations de suivi du produit en fin de vie utile, au moyen de l'au moins un code QR (101) lu par des quatrièmes dispositifs (113a) compris dans la pluralité de dispositifs (110a, 111a, 112a, 113a, ... 120a, tels que des terminaux ou des dispositifs de balayage, ou par le logiciel dédié installé sur un dispositif mobile.

2. Système de lecture d'informations personnalisées (100) selon la revendication 1, **caractérisé en ce que** les informations envoyées par le bloc logiciel à l'au moins un code QR (101) sont cryptées par un algorithme et ne peuvent être décodées à destination qu'au moyen d'une clé, ladite clé étant stockée dans au moins un dispositif compris dans la pluralité de dispositifs (110a, 111a, 112a, 113a, ... 120a) ou transmises à l'au moins un code QR (101) par le bloc logiciel.

3. Système de lecture d'informations personnalisées (100) selon la revendication 2, **caractérisé en ce que** ladite clé est unique pour chaque catégorie d'utilisateurs.

4. Système de lecture d'informations personnalisées (100) selon la revendication 1, **caractérisé en ce qu'**une pluralité de code QR (101), associés à au moins un produit, sont activés et rendus lisibles de manière différenciée à chaque étape spécifiée de la vie du produit, chaque code QR étant configuré pour au moins un bloc d'informations compris dans la pluralité de blocs d'informations (110, 111, 112, 113... 120) à travers au moins un dispositif compris dans la pluralité de dispositifs (110a, 111a, 112a, 113a, ... 120a) différenciés par des niveaux de lecture associés à des privilèges d'utilisateur.

5. Système de lecture d'informations personnalisées (100) selon la revendication 1, **caractérisé en ce qu'**il comprend une base de données de registre unique, les informations relatives à chaque produit étant stockées avec la base de données de registre unique.

6. Système de lecture d'informations personnalisées (100) selon la revendication 1, **caractérisé en ce que** ledit programme logiciel dédié a une pluralité de sections auxquelles chaque utilisateur, enregistré ou autorisé à accéder, peut accéder selon des privilèges spécifiques, pour lire et/ou lire/écrire des informations contenues dans un ou plusieurs blocs d'informations, mettant également à jour ladite base de données.

7. Système de lecture d'informations personnalisées (100) selon la revendication 1, **caractérisé en ce que** les données comprises dans la pluralité de blocs d'informations (110, 111, 112, 113... 120) sont des données relatives à au moins un produit, et/ou à un produit et ses produits connexes, lesdites données comprenant des données de production, d'authenticité, des caractéristiques techniques, la composition, la date de péremption, l'origine et le stade de vie utile.

8. Système de lecture d'informations personnalisées (100) selon la revendication 1, **caractérisé en ce que** ledit bloc logiciel est configuré pour faire correspondre en temps réel des données comprises dans la pluralité de blocs d'informations (110, 111, 112, 113... 120) relatives à au moins un code QR (101) et des données comprises dans la base de données, et pour vérifier en temps réel les anomalies d'un produit au moyen de ladite correspondance.

9. Système de lecture d'informations personnalisées (100) selon la revendication 1, **caractérisé en ce que** ledit bloc logiciel est configuré pour faire correspondre en temps réel des données comprises dans la pluralité de blocs d'informations (110, 111, 112, 113... 120) relatives à au moins un code QR (101) et des données comprises dans la base de données, et pour vérifier en temps réel les anomalies d'un produit au moyen de ladite correspondance et/ou des accès au système de lecture d'informations personnalisées (100) et à l'au moins un code QR (101).

10. Système de lecture d'informations personnalisées (100) selon la revendication 8 ou 9, **caractérisé en ce que** ledit bloc logiciel est configuré pour envoyer un message d'avertissement à au moins un utilisateur, et pour enregistrer ce message d'avertissement dans la base de données, si la vérification détecte des anomalies.
